# EUROPÄISCHE PATENTSCHRIFT

(11) **EP 0 713 811 B1**
(45) Veröffentlichungstag und Bekanntmachung des Hinweises auf die Patenterteilung: **16.02.2000**
(21) Anmeldenummer: 95118236.9
(22) Anmeldetag: 20.11.1995
(51) Int. Cl.: B60T 1/08

(54) **Bremsanlage mit einem hydrodynamischen Retarder, insbesondere für Kraftfahrzeuge**
Brake installation with a hydrodynamic retarder, particularly for motor vehicles
Installation de freinage ayant un ralentisseur hydrodynamique, notamment pour véhicules à moteur

(30) Priorität: 26.11.1994 DE 4442219
(43) Veröffentlichungstag der Anmeldung: 29.05.1996
(73) Patentinhaber: Voith Turbo Beteiligungs GmbH, 89522 Heidenheim (DE)
(72) Erfinder: Friedrich, Jürgen, D-74564 Crailsheim (DE); Müller, Wolfgang, D-74564 Crailsheim (DE)
(74) Vertreter: Dr. Weitzel & Partner

(56) Entgegenhaltungen:
- DE-A- 2 710 927
- DE-A- 2 927 582
- DE-A- 3 028 429
- DE-A- 4 408 350

## Beschreibung

Die Erfindung betrifft eine Bremsanlage mit einem hydrodynamischen Retarder, insbesondere für Kraftfahrzeuge. Auf den Oberbegriff von Anspruch 1 wird verwiesen.

Bremsanlagen dieser Art sind in einer großen Zahl von Varianten bekanntgeworden, siehe z.B. DE 44 08 350 A (Druckschrift 1). Auch kennt man Retarder aus einer großen Anzahl von Veröffentlichungen, siehe beispielsweise DE 29 27 582 (Druckschrift 2). Schließlich sind Steuereinrichtungen zum Steuern des Füllungsgrades des Arbeitsraumes von Retardern bekanntgeworden, siehe beispielsweise DE 30 28 429 (Druckschrift 3).

Derzeit übliche Bremsanlagen weisen eine Steuereinrichtung auf, die ein Proportionalventil umfaßt, ferner eine Sumpfleitung zwischen Proportionalventil und Arbeitsmittelsumpf. Der Sumpf ist außerdem mit dem Arbeitsraum des Retarders über einen Steigkanal verbunden. Beim Bremsbetrieb wird mittels des Proportionalventils über die Sumpfleitung Druck auf den Spiegel des im Sumpf befindlichen Arbeitsmittels aufgebracht. Dieses steigt daraufhin im Steigkanal an und gelangt in den Arbeitsraum, den sie mit Arbeitsmittel mehr oder minder anfüllt. Das genannte Proportionalventil ist außerdem an einen Luftabscheider (Ölnebenraum) angeschlossen, der das Arbeitsmittel - im allgemeinen Öl - von der darin eingeschlossenen Luft abtrennt und wieder in den Kreislauf zurückführt, während die Luft nach außen abgeführt wird.

Das aus Öl bestehende Arbeitsmittel wird außerdem zum Schmieren der Lager des Retarders verwendet.

Der Bremsanlage ist ein Wärmetauscher zugeordnet, um die erheblichen, während des Bremsens anfallenden Wärmemengen abzuführen.

Beim Betrieb von Bremsanlagen der beschriebenen Art ist bei hohen Drehzahlen (> 2000 min⁻¹) ein bisher ungelöstes Problem aufgetaucht: Im Laufe der Zeit verschwand mehr und mehr Öl aus der gesamten Bremsanlage. Außerdem stellte man fest, daß bei diesen hohen Drehzahlen ohne Last die Lagertemperaturen deutlich anstiegen.

Dabei gibt es eine Vielzahl von Möglichkeiten des Austretens von Leckflüssigkeit - siehe z.B. Druckschrift (3).

Aus der Vielzahl von Möglichkeiten haben die Erfinder die wahre Ursache wie folgt erkannt: Es ist zwar seit langem bekannt, daß im bremsfreien Betrieb, d.h. bei ölfreiem Arbeitsraum des Retarders die dort eingeschlossene Luft zirkuliert und damit eine unerwünschte Verlustleistung erzeugt. Es wurden alle möglichen Anstrengungen unternommen, um diese unerwünschte Luftzirkulation zu unterbinden - siehe Druckschrift (2). Was jedoch nicht erkannt wurde, und was die Erfinder erstmals herausfanden, ist die Tatsache, daß die Luft nicht nur im Arbeitsraum zirkuliert sondern auch einen Druck aufbaut, und daß dieser Druck auf den Ölsumpf einwirkt. Dabei findet die Einwirkung über den genannten Steigkanal statt, der mit dem Sumpf in dessen Bodenbereich in leitender Verbindung steht. Der Druck wirkt somit von unten her auf die Ölmasse des Sumpfs. Dadurch wird Öl durch die genannte Sumpfleitung gedrückt, gelangt zum Proportionalventil, von dort in den genannten Luftabscheider, den sogenannten Ölnebenraum. Bei Anfall entsprechend großer Ölmengen an dieser Stelle vermag der Luftabscheider seine Funktion nicht mehr zu erfüllen, so daß durch den Entlüftungskanal Öl in unzulässig großen Mengen abgeführt wird und ins Freie gelangt.

Demgemäß besteht die erfindungsgemäße Lehre darin, Mittel vorzusehen, um beim Nichtbremsbetrieb eine Druckbalance der auf den Spiegel des Arbeitsmittelsumpfes einwirkenden Kräfte zu erreichen. Es wird somit vermieden, daß der beim Nichtbremsen erzeugte, unerwünschte Luftstrom zu einem Entweichen von Öl aus dem System führt.

Die Erfindung ist anhand der Zeichnung näher erläutert.

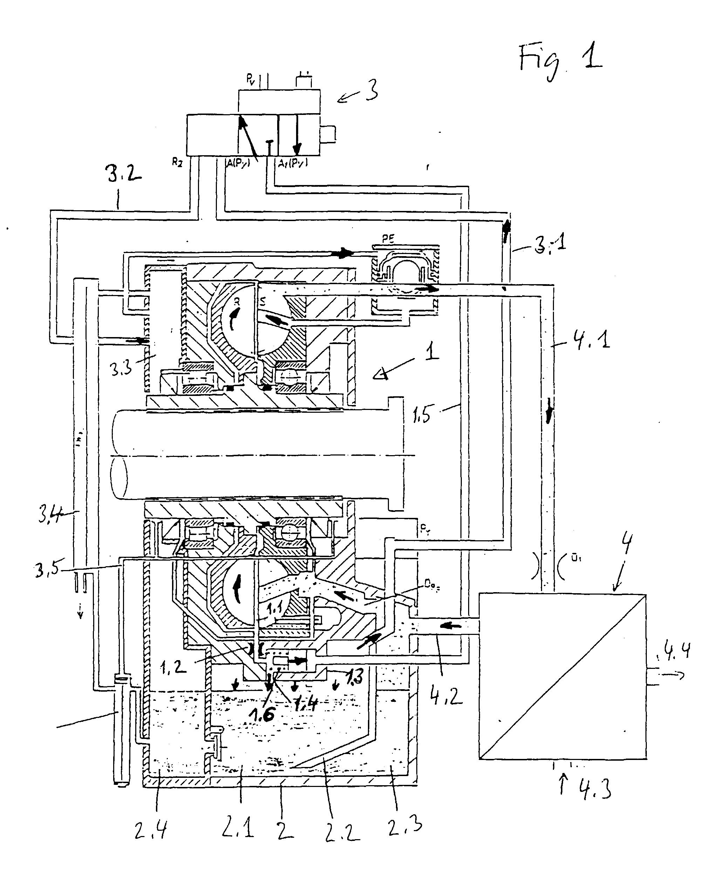

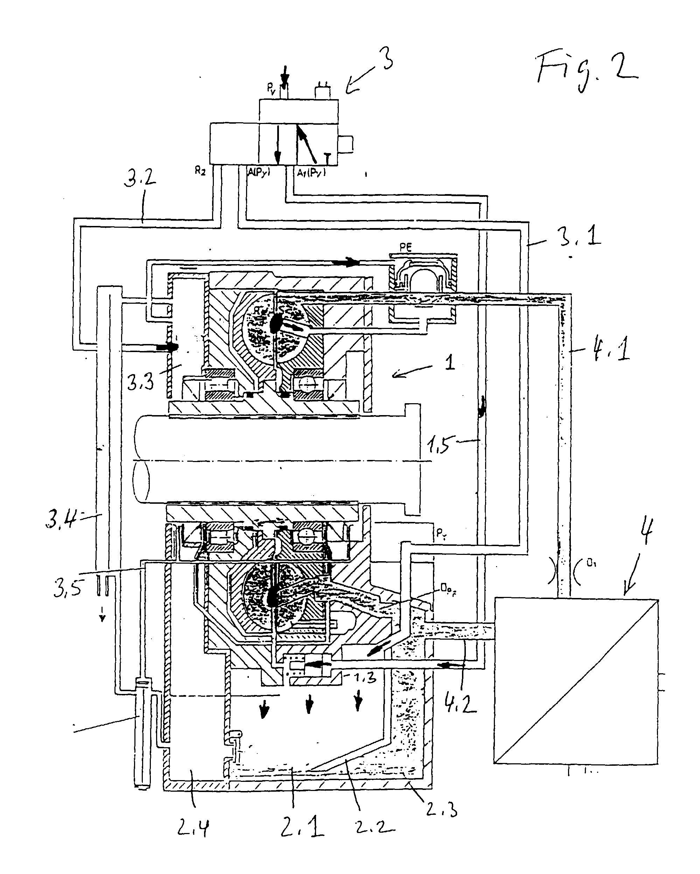

Figur 1 veranschaulicht eine erfindungsgemäße Bremsanlage im Leerlaufbetrieb, während Figur 2 die Anlage im Bremsbetrieb zeigt.

Aus beiden Figuren erkennt man im einzelnen folgendes:

Der Retarder 1 weist einen Rotor R und einen Stator S auf. Das Retardergehäuse 2 bildet einen Hauptraum 2.1, in dem sich ein Ölsumpf befindet, ferner einen Nebenraum 2.4. Eine Trennwand 2.2 trennt den Hauptraum 2.1 von einem Steigkanal 2.3 ab.

Die Bremsanlage weist eine Steuereinrichtung auf. Diese umfaßt als wesentliches Teil ein Proportionalventil 3, mit integriertem 3/2-Ventil. Eine Leitung 3.1 stellt eine Verbindung zwischen dem Hauptraum 2.1 und dem Proportionalventil 3 her. Eine Leitung 3.2 führt zu einem Öl-Nebenraum 3.3. Dieser dient als Ölabscheider. Er ist an einen Entlüftungskanal 3.4 angeschlossen, der mit einer Lecköl-Rückführleitung der Lager 3.5 in Verbindung steht.

Wie man sieht, steht Steigkanal 2.3 mit dem Arbeitsraum des Retarders 1 in leitender Verbindung, und zwar auf dem Wege über dessen Stator S.

Es ist ein Wärmetauscher 4 vorgesehen. Dieser ist über eine Leitung 4.1 an den Arbeitsraum des Retarders 1 angeschlossen und über eine Leitung 4.2 an den Steigkanal 2.3. Wärmetauscher 4 hat außerdem einen Zulauf 4.3 und einen Ablauf 4.4 für Kühlwasser.

Ganz entscheidende Bestandteile der Erfindung sind die folgenden: Retarder 1 weist zwischen Rotor R und Stator S einen Spalt 1.1 auf. Zwischen diesem Spalt 1.1 und dem Hauptraum 2.1 kann eine leitende Verbindung hergestellt oder unterbunden werden. Man erkennt in dem an Spalt 1.1 angeschlossenen Kanal eine Drossel 1.2, ferner - als äußerst wichtiges Element - ein 2/2-Ventil 1.3. Ventil 1.3 ist über einen Auslaß 1.4 an den Hauptraum 2.1 anschließbar und über eine Leitung 1.5 an das 3/2 Wege-Ventil.

Im bremsfreien Betrieb bleibt Ventil 1.3 - im folgenden "Spaltabsperrventil" genannt - geöffnet. Im konkreten Fall wird es durch seine Feder 1.6 offengehalten. Es findet kein Ölanstieg in der Sumpfleitung 3.1 statt. Die Ölspiegel im Hauptraum 2.1, im Nebenraum 2.4 sowie im Steigkanal 2.3 haben alle dieselbe Höhe. Der im Arbeitsraum des Retarders 1 erzeugte Luftstrom wird über die Sumpfleitung 3.1 abgeführt.

Ein besonders günstiger Nebeneffekt besteht in folgendem: Der Arbeitsraum des Retarders saugt Öl-Luft-Gemisch über den Steigkanal 2.3 an. Es bildet sich ein Öl-Luft-Gemisch im Kreislauf und auch schon im Steigkanal selbst. Durch die Fliehkraft bedingt scheidet sich eine gewisse Ölmenge im Arbeitsraum des Retarders 1 ab. Dies führt sowohl zu einer Verringerung der Verlustleistung als auch zu einer Kühlung.

Im Bremsbetrieb, wie man aus Figur 2 erkennt, wirkt über die Sumpfleitung 3.1, von Proportionalventil 3 ausgehend, Luftdruck auf den Spiegel des Sumpfes im Hauptraum 2.1. Hierdurch wird Öl vom Hauptraum 2.1 in den Steigkanal 2.3 gedrückt, wobei es um die Unterkante der Trennwand 2.2 herumströmt. Öl steigt im Steigkanal 2.3 hoch, durch die Wandung des Stators S des Retarders 1 hindurch, und füllt den Arbeitsraum des Retarders an.

Leitung 1.5 ist durch das 3/2 Wege-Ventil 3 ebenfalls druckbeaufschlagt, so daß das Spaltabsperrventil 1.3 schließt. Somit wird die leitende Verbindung zwischen dem Arbeitsraum des Retarders 1 und dem Hauptraum 2.1 abgesperrt. Auf die Pfeile, die die Druckrichtungen bzw. Strömungsrichtung andeuten, wird verwiesen.

Durch die Erfindung wird im einzelnen folgendes erreicht:
* Es wird zuverlässig vermieden, daß im bremsfreien Betrieb der Ölsumpf durch die Sumpfleitung entleert wird, und es wird daher eine unzulässige Leckage unterbunden.
* Die Ölversorgung der Lager bleibt sichergestellt.
* In der Steigleitung bildet sich ein Öl-Luft-Gemisch, das in den Arbeitsraum des Retarders gelangt, dort einen Ölfilm an den Innenwänden des Arbeitsraumes bildet, was zu einer Verringerung der Verlustleistung und zu einer Kühlung des Retarders führt. Die erzeugte Wärme aus der Verlustleistung wird hierbei über den Wärmetauscher abgeführt.

## Patentansprüche

1. Bremsanlage, insbesondere für ein Kraftfahrzeug, mit einem einkreisigen Kühlsystem;
1.1 mit einem hydrodynamischen Retarder (1), der ein Statorschaufelrad (S) und ein Rotorschaufelrad (R), die einen Spalt (1.1) miteinander bilden, aufweist;
1.2 mit einem Arbeitsmittelsumpf im Hauptraum (2.1);
1.3 mit einer Steuereinrichtung zum Steuern des Füllungsgrades des Arbeitsraumes des Retarders (1);
1.4 die Steuereinrichtung umfaßt ein Proportionalventil (3) sowie eine Verbindungsleitung (3.1) zum Sumpf;
1.5 der Sumpf steht mit dem Arbeitsraum des Retarders über einen Steigkanal (2.3) in leitender Verbindung;
gekennzeichnet durch die folgenden Merkmale:
1.6 es sind Mittel vorgesehen, um beim Nichtbremsbetrieb zu erreichen, daß die Ölspiegel im Hauptraum (2.1) und im Steigkanal (2.3) dieselbe Höhe aufweisen;
1.7 die Mittel umfassen eine leitende Verbindung zwischen dem Spalt (1.1) des Retarders (1) und dem Raum oberhalb des Sumpfes, wobei diese Leitung durch ein Ventil (1.3) absperrbar ist;
1.8 das Spaltabsperrventil (1.3) ist an das Proportionalventil (3) über eine Leitung (1.5) angeschlossen.

2. Bremsanlage nach Anspruch 1, dadurch gekennzeichnet, daß in der leitenden Verbindung zwischen Spalt (1.1) des Retarders (1) und dem Raum oberhalb des Sumpfes zusätzlich zu dem Spaltabsperrventil (1.3) eine Drossel (1.2) vorgesehen ist.

3. Bremsanlage nach einem der Ansprüche 1 oder 2, dadurch gekennzeichnet, daß das Spaltabsperrventil eine Feder (1.5) aufweist, die das Spaltabsperrventil (1.3) bei Nicht-Brems-Betrieb offenhält.

## Claims

1. Brake installation, particularly for a motor vehicle with a single circuit cooling system;
1.1 with a hydrodynamic retarder (1 ) which comprises a stator blade wheel (S) and a rotor blade wheel (R) which together form a gap (1.1);
1.2 with a working medium sump in the main chamber (2.1);
1.3 with a control device for controlling the filling level of the working chamber of the retarder (1);
1.4 the control device comprises a proportional valve (3) and connection line (3.1) to the sump;
1.5 the sump is line connected with the working chamber of the retarder by an ascending channel (2.3);
characterised by the following features:
1.6 means are provided to ensure during non-braking operation that the oil level in the main chamber (2.1) and in the ascending channel (2.3) is the same height;
1.7 the means comprise a line connection between the gap (1.1) of the retarder (1) and the chamber above the sump, wherein said line can be blocked by a valve (1.3);
1.8 the gap blocking valve (1.3) is connected to the proportional valve (3) by a line (1.5).

2. Brake installation according to claim 1, characterised in that in the line connection between the gap (1.1) of the retarder (1) and the chamber above the sump a restrictor (1.2) is provided in addition to the gap blocking valve (1.3).

3. Brake installation according to one of claims 1 or 2, characterised in that the gap blocking valve comprises a spring (1.5) which holds the gap blocking valve (1.3) open during non-braking operation.

## Revendications

1. Installation de freinage, en particulier pour un véhicule automobile, avec un système de refroidissement à un circuit;
1.1 avec un ralentisseur hydrodynamique (1), qui présente une roue de stator à aubages (S) et une roue de rotor à aubages (R) qui forment entre-elles un entrefer (1.1) ;
1.2 avec une flaque d'agent de travail dans la chambre principale (2.1);
1.3 avec un dispositif de commande pour la commande du taux de remplissage de la chambre de travail du ralentisseur (1);
1.4 le dispositif de commande comporte une vanne proportionnelle (3) ainsi qu'une conduite de liaison (3.1) avec la flaque;
1.5 la flaque est en liaison conductrice avec la chambre de travail du ralentisseur par l'intermédiaire d'un canal montant (2.3);
caractérisée par les caractéristiques suivantes:
1.6 des moyens sont prévus pour faire en sorte que, en fonctionnement sans freinage, les niveaux d'huile dans la chambre principale (2.1) et dans le canal montant (2.3) présentent la même hauteur;
1.7 les moyens comportent une liaison conductrice entre l'entrefer (1.1) du ralentisseur (1) et la chambre au-dessus de la flaque, cette conduite pouvant être isolée au moyen d'une valve (1.3);
1.8 la valve d'isolation de l'entrefer (1.3) est raccordée à la valve proportionnelle (3) par l'intermédiaire d'une conduite (1.5).

2. Installation de freinage selon la revendication 1, caractérisée en ce qu'un étrangleur (1.2) est prévu en plus de la valve d'isolation de l'entrefer (1.3) dans la liaison conductrice entre l'entrefer (1.1) du ralentisseur (1) et la chambre au-dessus de la flaque.

3. Installation de freinage selon l'une des revendications 1 ou 2, caractérisée en ce que la valve d'isolation de l'entrefer présente un ressort (1.5) qui maintient la valve d'isolation de l'entrefer (1.3) ouverte en fonctionnement sans freinage.
